# EUROPEAN PATENT APPLICATION

(11) **EP 4 718 935 A1**
(43) Date of publication of application: **01.04.2026**
(21) Application number: 24830293.7
(22) Date of filing: 23.05.2024
(51) Int. Cl.: H04W 76/10

(54) **DATA TRANSMISSION METHOD, APPARATUS AND SYSTEM**

(30) Priority: 30.06.2023 CN 202310802673
(71) Applicant: Huawei Technologies Co., Ltd., Shenzhen, Guangdong 518129 (CN)
(72) Inventor: ZHANG, Haisen, Shenzhen, Guangdong 518129 (CN); LI, Meng, Shenzhen, Guangdong 518129 (CN); LI, Yan, Shenzhen, Guangdong 518129 (CN); CHEN, Lei, Shenzhen, Guangdong 518129 (CN)
(74) Representative: Gill Jennings & Every LLP
(86) International application number: PCT/CN2024/094822
(87) International publication number: WO 2025/001645

(57) **Abstract**

This application provides a data transmission method, apparatus, and system, and is applied to the field of communication technologies. The data transmission method provided in this application includes: A terminal device receives a connection release message sent by a first network device, where the connection release message includes first information, the first information indicates the terminal device, and the first information is used to identify the first network device within a first range; and the terminal device sends a connection setup request message to a second network device, where the connection setup request message includes second information, the second information is used to identify the first network device within a second range, and the second range is less than the first range.

## Description

### TECHNICAL FIELD

This application relates to the field of communication technologies, and in particular, to a data transmission method, apparatus, and system.

### BACKGROUND

In an NR (New Radio) technology, an access network manages a terminal device context and is responsible for partial mobility management. For example, in the NR technology, an RRC_INACTIVE state (radio resource control-inactive state) is changed from an RRC_CONNECTED state (radio resource control-connected state) by using an RRC release (RRC release) message. When a terminal device is released from the RRC_CONNECTED state to the RRC_INACTIVE state, a network device allocates an identifier, namely, an I-RNTI (inactive radio network temporary identifier), to the terminal device, and stores a terminal device context by using the identifier. The network device is also referred to as a last serving gNB (last serving gNB) of the UE, and is sometimes denoted as an anchor gNB (anchor gNB). When the terminal device requests to resume a previously suspended radio resource control (RRC) connection or update a RAN-based notification area (RNA), the terminal device sends an RRCResumeRequest message to a current network device. For example, the I-RNTI is used by the network device to address the terminal device in RRC signaling, and the I-RNTI includes a part used to identify the terminal device and a part used to identify the network device. In conventional technologies, it is difficult to identify a unique network device within a network-wide range by using an identifier sent by a network device to a terminal device during mobility management.

### SUMMARY

Embodiments of this application provide a data transmission method, apparatus, and system, to resolve a problem that it is difficult to identify a unique network device within a network-wide range by using an identifier sent by a network device to a terminal device during mobility management.

To achieve the foregoing objective, the following technical solutions are used in embodiments of this application.

According to a first aspect, a data transmission method is provided. The method may be performed by a terminal device, or may be performed by a component (for example, a processor, a chip, or a chip system) of the terminal device, or may be implemented by a logical module or software that can implement all or some functions of the terminal device. The following uses an example in which the method is performed by the terminal device for description. The method includes: The terminal device receives a connection release message sent by a first network device, where the connection release message includes first information, the first information indicates the terminal device, and the first information is used to identify the first network device within a first range; and the terminal device sends a connection setup request message to a second network device, where the connection setup request message includes second information, the second information is used to identify the first network device within a second range, and the second range is less than the first range.

According to the foregoing method, the terminal device receives the first information sent by the first network device. The first information may be used to identify the first network device within a global range. Some or all information in the first information may be used by the terminal device to retrieve a terminal device identifier of a unique UE within a network-wide range when a connection is subsequently set up between the terminal device and another network device (for example, the second network device). In this case, the another network device (for example, the second network device) can accurately identify and find the terminal device within the network-wide range.

In a possible implementation, the terminal device receives a connection setup response message, where the connection setup response message indicates the terminal device to send information used to identify the first network device within the first range; and the terminal device sends a connection setup complete message, where the connection setup complete message includes third information, and the third information is used to identify the first network device within the first range.

In a possible implementation, the terminal device receives a connection setup accept message.

In a possible implementation, the first information and the second information are further used to identify a terminal device context (UE Context).

In a possible implementation, the first information includes one of the following:
an enhanced inactive radio network temporary identifier (eI-RNTI);
a first part of a network device identifier, a second part of the network device identifier, and a terminal device context identifier (UE context ID);
an inactive radio network temporary identifier (I-RNTI) and the network device identifier; and
the I-RNTI and the first part of the network device identifier, where
the first part of the network device identifier and the second part of the network device identifier are used to identify the first network device within the first range, and the second part of the network device identifier is used to identify the first network device within the second range.

In a possible implementation, the second information includes one of the following:
an I-RNTI;
a second part of a network device identifier and a UE context ID; and
a first part of the first information, where the first part of the first information is used to identify the terminal device within the second range, where
the second part of the network device identifier is used to identify the first network device within the second range.

In a possible implementation, the third information includes one of the following:
a part other than a first part of the first information, where the first part of the first information is used to identify the first network device within the second range;
a first part of a network device identifier; and
the first information, where
the first part of the network device identifier and the second part of the network device identifier are used to identify the first network device within the first range.

According to a second aspect, a data transmission method is provided. The method may be performed by a terminal device, or may be performed by a component (for example, a processor, a chip, or a chip system) of the terminal device, or may be implemented by a logical module or software that can implement all or some functions of the terminal device. The following uses an example in which the method is performed by the terminal device for description. The method includes: The terminal device receives a connection release message sent by a first network device, where the connection release message includes fourth information, the fourth information indicates the terminal device, and the fourth information is used to identify the first network device within a first range; and the terminal device sends a connection setup request message to a second network device, where the connection setup request message includes fifth information, the fifth information includes a first part of a terminal device context identifier (UE context ID), and the fifth information is used to identify the first network device within the first range.

According to the foregoing method, the terminal device receives the fourth information sent by the first network device. The fourth information may be used to identify the first network device within a global range. Some or all information in the fourth information may be used by the terminal device to retrieve an identifier of the first network device within a network-wide range when a connection is subsequently set up between the terminal device and another network device (for example, the second network device). In this case, the another network device (for example, the second network device) can accurately identify and find the first network device within the network-wide range.

In a possible implementation, the method further includes: receiving a connection setup response message, where the connection setup response message indicates the terminal device to send information including a second part of the UE context ID; and sending a connection setup complete message, where the connection setup complete message includes sixth information, and the sixth information includes a second part of a UE ID.

In a possible implementation, the method further includes: receiving a connection setup accept message.

In a possible implementation, the fourth information includes one of the following:
an enhanced inactive radio network temporary identifier (eI-RNTI);
a network device identifier, the first part of the UE context ID, and the second part of the UE context ID; and
an inactive radio network temporary identifier (I-RNTI) and the UE context ID.

In a possible implementation, the fifth information includes one of the following:
the network device identifier and the first part of the UE context ID; and
a first part of the fourth information, where the first part of the fourth information includes the first part of the UE context ID.

In a possible implementation, the sixth information includes one of the following:
a second part of the fourth information, where the second part of the fourth information includes the second part of the UE context ID;
the second part of the UE context ID; and
the fourth information.

According to a third aspect, a data transmission method is provided. The method may be performed by a first network device, or may be performed by a component (for example, a processor, a chip, or a chip system) of the first network device, or may be implemented by a logical module or software that can implement all or some functions of a terminal device. The following uses an example in which the method is performed by the first network device for description. The method includes: The first network device sends a connection release message, where the connection release message includes first information, and the first information is used to identify the first network device within a first range; the first network device receives, through a service-based interface, a request message that is for querying for a terminal device context (UE context) and that is sent by a second network device; and the first network device sends a UE context of a terminal device to the second network device.

In a possible implementation, the request message for querying for the terminal device context includes one of the following:
a terminal device context identifier (UE context ID) of the terminal device;
an inactive radio network temporary identifier (I-RNTI); and
an enhanced inactive radio network temporary identifier (eI-RNTI).

According to a fourth aspect, a data transmission method is provided. The method may be performed by a first network device, or may be performed by a component (for example, a processor, a chip, or a chip system) of the first network device, or may be implemented by a logical module or software that can implement all or some functions of a terminal device. The following uses an example in which the method is performed by the first network device for description. The method includes: The first network device sends a connection release message, where the connection release message includes fourth information, and the fourth information is used to identify the first network device within a first range; the first network device receives, through a service-based interface, a request message that is for querying for a terminal device context (UE context) and that is sent by a second network device; when the first network device finds the UE context, the first network device sends a message to the second network device to indicate that the query succeeds; and when the first network device cannot find the UE context, the first network device sends a message to the second network device to indicate that the query fails.

In a possible implementation, the request message for querying for the terminal device context includes one of the following:
a first part of a terminal device context identifier (UE context ID) of the terminal device;
an inactive radio network temporary identifier (I-RNTI); and
an enhanced inactive radio network temporary identifier (eI-RNTI).

According to a fifth aspect, a data transmission method is provided. The method may be performed by a second network device, or may be performed by a component (for example, a processor, a chip, or a chip system) of the second network device, or may be implemented by a logical module or software that can implement all or some functions of a terminal device. The following uses an example in which the method is performed by the second network device for description. The method includes: The second network device receives an access request message, where the access request message includes second information, and the second information is used to identify a first network device within a second range; when the second network device obtains a network device identifier based on the second information, the second network device sends a connection setup accept message; and when the second network device cannot obtain the network device identifier based on the second information, the second network device sends a connection setup response message, where the connection setup response message indicates the terminal device to send information used to identify the first network device within a first range, and the second range is less than the first range.

In a possible implementation, when the second network device cannot obtain a network device identifier (gNB ID) based on the second information, the method further includes: The second network device receives a connection setup complete message, where the connection setup complete message includes third information, and the third information is used to identify a message of first network device within the first range.

In a possible implementation, the method further includes: The second network device sends, through a service-based interface, a request message for querying for a terminal device context (UE context) to the first network device; and the second network device receives a UE context sent by the first network device.

In a possible implementation, the request message for querying for the UE context includes one of the following:
a terminal device context identifier (UE context ID) of the terminal device;
an inactive radio network temporary identifier (I-RNTI); and
an enhanced inactive radio network temporary identifier (eI-RNTI).

According to a sixth aspect, a data transmission method is provided. The method may be performed by a second network device, or may be performed by a component (for example, a processor, a chip, or a chip system) of the second network device, or may be implemented by a logical module or software that can implement all or some functions of a terminal device. The following uses an example in which the method is performed by the second network device for description. The method includes: The second network device receives a connection setup request message, where the connection setup request message includes fifth information, the fifth information includes a first part of a terminal device identifier (UE ID), and the fifth information is used to identify a first network device within a first range; the second network device sends, through a service-based interface, a request message for querying for a terminal device context (UE context) to the first network device; when a message received from the first network device indicates that the query successes, the second network device sends a connection setup complete message to the terminal device; and when the message received from the first network device indicates that the query fails, the second network device sends a connection setup response message to the terminal device, where the connection setup response message indicates the terminal device to send information including a second part of the UE ID.

In a possible implementation, when the message received from the first network device indicates that the query fails, the method further includes: The second network device receives the connection setup complete message, where the connection setup complete message includes sixth information, and the sixth information includes the second part of the UE ID.

In a possible implementation,
According to a seventh aspect, a communication apparatus is provided. The communication apparatus may be a terminal device. The communication apparatus includes a processor. The processor is coupled to a memory, the memory is configured to store computer-executable instructions, and the processor is configured to execute the instructions stored in the memory. When the instructions are run by the processor, the communication apparatus is enabled to perform the method according to the first aspect or the second aspect.

According to an eighth aspect, a communication apparatus is provided. The communication apparatus may be a first network device. The communication apparatus includes a processor. The processor is coupled to a memory, the memory is configured to store computer-executable instructions, and the processor is configured to execute the instructions stored in the memory. When the instructions are run by the processor, the communication apparatus is enabled to perform the method according to the third aspect or the fourth aspect.

According to a ninth aspect, a communication apparatus is provided. The communication apparatus may be a second network device. The communication apparatus includes a processor. The processor is coupled to a memory, the memory is configured to store computer-executable instructions, and the processor is configured to execute the instructions stored in the memory. When the instructions are run by the processor, the communication apparatus is enabled to perform the method according to the fifth aspect or the sixth aspect.

According to a tenth aspect, a computer-readable storage medium is provided. The computer-readable storage medium stores a computer program. When the computer program is executed by a computer, the method according to the first aspect or the second aspect is performed.

According to an eleventh aspect, a computer-readable storage medium is provided. The computer-readable storage medium stores a computer program. When the computer program is executed by a computer, the method according to the third aspect or the fourth aspect is performed.

According to a twelfth aspect, a computer-readable storage medium is provided. The computer-readable storage medium stores a computer program. When the computer program is executed by a computer, the method according to the fifth aspect or the sixth aspect is performed.

According to a thirteenth aspect, a communication system is provided. The communication system includes a terminal device, a first network device, and a second network device. The terminal device is configured to perform the method according to the first aspect. The first network device is configured to perform the method according to the third aspect. The second network device is configured to perform the method according to the fifth aspect.

According to a fourteenth aspect, a communication system is provided. The communication system includes a terminal device, a first network device, and a second network device. The terminal device is configured to perform the method according to the second aspect. The first network device is configured to perform the method according to the fourth aspect. The second network device is configured to perform the method according to the sixth aspect.

It should be understood that descriptions of technical features, technical solutions, beneficial effects, or similar languages in this application do not imply that all features and advantages can be implemented in any single embodiment. On the contrary, it may be understood that the descriptions of the features or the beneficial effects indicate that at least one embodiment includes specific technical features, technical solutions, or beneficial effects. Therefore, the descriptions of the technical features, the technical solutions, or the beneficial effects in this specification do not necessarily refer to a same embodiment. Further, the technical features, the technical solutions, and the beneficial effects described in embodiments may be combined in any appropriate manner. A person skilled in the art may understand that an embodiment may be implemented without one or more specific technical features, technical solutions, or beneficial effects in specific embodiments. In other embodiments, additional technical features and beneficial effects may also be identified in specific embodiments that do not reflect all embodiments.

### BRIEF DESCRIPTION OF DRAWINGS

FIG. 1 is a diagram of an architecture of a network system according to an embodiment of this application;
FIG. 2 is a diagram of a structure of a communication apparatus according to an embodiment of this application;
FIG. 3a is an interaction diagram of a data transmission method according to an embodiment of this application;
FIG. 3b is an interaction diagram of another data transmission method according to an embodiment of this application;
FIG. 3c is an interaction diagram of still another data transmission method according to an embodiment of this application;
FIG. 4a is an interaction diagram of a data transmission method according to an embodiment of this application;
FIG. 4b is an interaction diagram of another data transmission method according to an embodiment of this application;
FIG. 4c is an interaction diagram of still another data transmission method according to an embodiment of this application;
FIG. 5 is a diagram of a structure of another communication apparatus according to an embodiment of this application; and
FIG. 6 is a diagram of a structure of still another communication apparatus according to an embodiment of this application.

### DESCRIPTION OF EMBODIMENTS

The following describes the technical solutions in embodiments of this application with reference to the accompanying drawings in embodiments of this application. In descriptions of this application, unless otherwise specified, "/" represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A and B may be singular or plural. In addition, in the descriptions of this application, "a plurality of' means two or more than two, unless otherwise specified. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, a word like "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word like "example" or "for example" is intended to present a related concept in a specific manner for ease of understanding.

A resource allocation method provided in embodiments of this application is applicable to various communication systems. For example, the resource allocation method provided in embodiments of this application may be applied to a 3rd generation partnership project (3rd generation partnership project, 3GPP) communication system, for example, a long term evolution (long term evolution, LTE) system, a 5th generation (5th generation, 5G) system, a vehicle-to-everything (vehicle-to-everything, V2X) system, an LTE and NR hybrid networking system, a device-to-device (device-to-device, D2D) system, a machine-to-machine (machine-to-machine, M2M) communication system, or an internet of things (Internet of Things, IoT), or the communication system may be a non-3GPP communication system, or another future-oriented similar new communication system, for example, a 6th generation (6th generation, 6G) system. This is not specifically limited in embodiments of this application. In addition, terms "system" and "network" may be interchanged.

A terminal device in embodiments of this application may be referred to as UE, and a network device may be referred to as a base station or a gNB.

It should be noted that a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Optionally, the network device in embodiments of this application is a device that connects a terminal device to a wireless network. The network device in embodiments of this application may include base stations (base stations) in various forms, for example, may be a macro base station, a micro base station (also referred to as a small cell), a relay station, an access point, a transmitting point (transmitting point, TP), an evolved NodeB (evolved NodeB, eNodeB), a transmission reception point (transmission reception point, TRP), a next generation NodeB (next generation NodeB, gNB) in a 5G mobile communication system, a device that implements a base station function in a communication system evolved after 5G, a mobile switching center, or a device that performs a base station function in device-to-device (Device-to-Device, D2D), vehicle-to-everything (vehicle-to-everything, V2X), or machine-to-machine (machine-to-machine, M2M) communication, may be a network device in an NTN communication system, in other words, may be deployed on a high-altitude platform or a satellite, or may be a module or a unit that completes some base station functions, for example, may be a central unit (central unit, CU), a distributed unit (distributed unit, DU), or a radio unit (Radio unit, RU) in a cloud access network (cloud radio access network, C-RAN) system, for example, a CU, a DU, or an RU in an O-RAN architecture. A specific technology and a specific device form that are used by the network device are not limited in embodiments of this application. All or some functions of the network device may alternatively be implemented by using a software function running on hardware, or may be implemented by using a virtualization function or a service-based function instantiated on a platform (for example, a cloud platform).

In another possible scenario, a plurality of network devices cooperate to assist the terminal in implementing radio access, and different network devices respectively implement some functions of an access network. For example, the network device in this application may include a plurality of network devices, and is not limited to a single network device. Functions implemented by the network device in this application may also be implemented by a plurality of network devices, or may be implemented by some of the plurality of network devices. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

Optionally, the terminal device in embodiments of this application may be a device having a wireless transceiver function, and may also be referred to as a terminal (terminal). The terminal device may be specifically user equipment, an access terminal, a subscriber unit (subscriber unit), a subscriber station, a mobile station (mobile station), a customer-premises equipment (customer-premises equipment, CPE), a remote station, a remote terminal, a mobile device, a mobile terminal, a user terminal, a wireless communication device, a user agent, a user apparatus, or the like. The terminal device may alternatively be a satellite phone, a cellular phone, a smartphone, a cordless phone, a session initiation protocol (session initiation protocol, SIP) phone, a wireless data card, a wireless modem, a tablet computer, a computer having a wireless transceiver function, a wireless local loop (wireless local loop, WLL) station, a personal digital assistant (personal digital assistant, PDA), a handheld device having a wireless communication function, a computing device or another processing device connected to a wireless modem, a vehicle-mounted device, a communication device on a high-altitude aircraft, a wearable device, an uncrewed aerial vehicle, a robot, an intelligent point of sale (point of sale, POS) machine, a machine type communication device, a terminal device in D2D, a terminal device in V2X, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. A specific technology and a specific device form that are used by the terminal device are not limited in embodiments of this application. All or some functions of the terminal device may alternatively be implemented by using a software function running on hardware, or may be implemented by using a virtualization function or a service-based function instantiated on a platform (for example, a cloud platform).

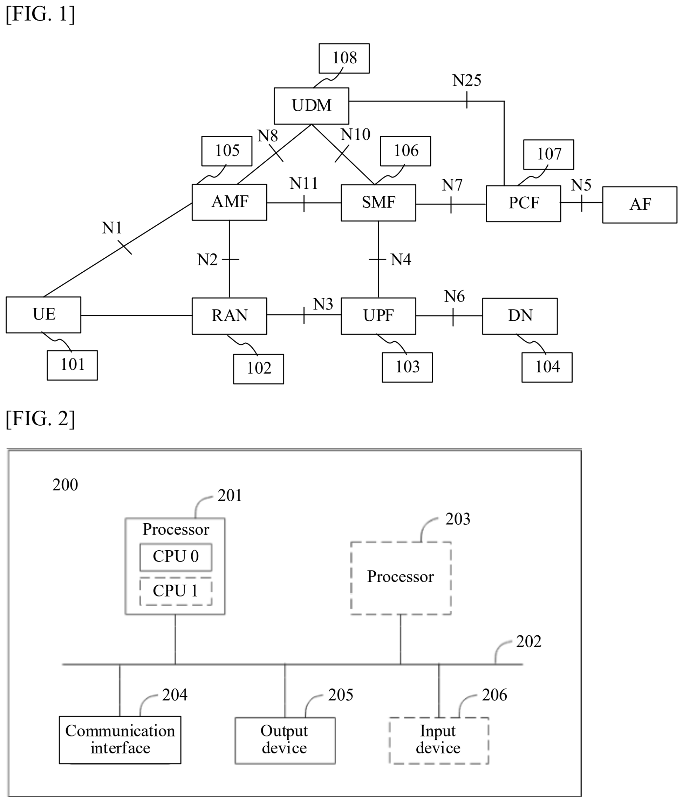

FIG. 1 is a diagram of a 5G network architecture. The following describes a 5G network structure in detail with reference to FIG. 1.

An architecture of a 5G system is divided into two parts: an access network and a core network. The access network is configured to implement a function related to radio access. The core network mainly includes the following several key logical network elements: a radio access network (RAN, Radio Access Network) 102, an access and mobility management function (AMF, Access and Mobility Management Function) 105, a session management function (SMF, Session Management Function) 106, a user plane function (UPF, User Plane Function) 103, a policy control function (Policy Control Function) 107, and a unified data management (UDM, Unified Data Management) 108.

UE 101 is a network terminal device, for example, a mobile phone or an internet of things terminal device.

The RAN 102 is a device providing radio access for a terminal device, and includes, but is not limited to, an eNodeB, a Wi-Fi AP, a WiMAX BS, or the like.

The AMF 105 is mainly responsible for mobility management in a mobile network, for example, user location update, registration of a user with a network, and user switching.

The SMF 106 is mainly responsible for session management in the mobile network, for example, session setup, modification, and release. Specific functions are, for example, allocating an IP address to the user and selecting the UPF 103 that provides a packet forwarding function.

The PCF 107 is responsible for providing policies, for example, a QoS policy or a slice selection policy, for the AMF and the SMF.

The UDM 108 is configured to store user data, for example, subscription information and authentication/authorization information.

An AF (Application Function, application function) is responsible for providing a service for a 3GPP network, for example, affecting service routing, and interacting with the PCF to perform policy control.

The UPF 103 is mainly responsible for processing a user packet, for example, forwarding and charging the user packet.

A DN 104 is a carrier network that provides a data transmission service for the user, for example, an IMS (IP Multi-media Service, IP multimedia service) or an internet.

The UE accesses a data network (Data Network, DN) by setting up a PDU session (PDU session) among the UE, the RAN, the UPF, and the DN.

In the discussion of evolution of a currently disclosed network architecture, it has been proposed that an SBA network architecture, that is, RAN servitization, is expected to be introduced for subsequent evolution of a wireless network architecture, in other words, a service-based interface is introduced for a network device. The RAN service-based architecture has the following advantages.

End-to-end unified orchestration, for example, unified service discovery and service invoking, is implemented based on servitization. Function coupling between network elements is reduced and a feature rollout speed is improved. From the perspective of performance, in the RAN service-based architecture, a quantity of signaling transmission hops can be reduced and fast connection setup can be implemented. In the RAN service-based architecture, a current technical route is: The RAN stores a user context and does not release the user context until the UE is deregistered. This architecture can simplify downlink signaling addressing (core network elements directly interact with network devices), and avoid problems of path recurvation caused by downlink signaling and asymmetric uplink and downlink procedures. In this network architecture, because a base station may be directly connected to all network elements of the CN, mobility management and context management for the UE may no longer depend on the AMF for centralized management, and the RAN may manage a UE context without forwarding a message via the AMF. This technology has a feature that the RAN directly interacts with a 5GC NF without using the AMF. Currently, in an NR technology, a technology in which the RAN manages the UE context and is responsible for partial mobility management includes management related to a terminal in an inactive state. For this technology, management and transfer of the UE context between RANs are transparent to a 5GC.

Optionally, the network device, the terminal device, or a core network device in embodiments of this application may be deployed on land, including an indoor device, an outdoor device, a handheld device, or a vehicle-mounted device, may be deployed on water, or may be deployed on an airplane, a balloon, or an artificial satellite in the air. Application scenarios of the network device, the terminal device, or the core network device are not limited in embodiments of this application.

Optionally, the network device and the terminal device in embodiments of this application may communicate with each other by using a licensed spectrum, may communicate with each other by using an unlicensed spectrum, or may communicate with each other by using both a licensed spectrum and an unlicensed spectrum. The network device and the terminal device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the network device and the terminal device is not limited in embodiments of this application.

Optionally, the network device, the terminal device, or the core network device in embodiments of this application may also be referred to as a communication apparatus, and may be a general-purpose device or a dedicated device. This is not specifically limited in embodiments of this application.

Optionally, in a specific implementation, the terminal device, the network device, or the core network device may use a composition structure shown in FIG. 2, or include components shown in FIG. 2. FIG. 2 is a composition diagram of a communication apparatus 200 according to this application. The communication apparatus 200 may be a terminal device, or a chip or a system on chip in the terminal device; may be a network device, or a module, a chip, or a system on chip in the network device; or may be a core network device, or a module, a chip, or a system on chip in the core network device.

As shown in FIG. 2, the communication apparatus 200 includes at least one processor 201 and at least one communication interface (FIG. 2 is described merely by using an example in which one communication interface 204 and one processor 201 are included). Optionally, the communication apparatus 200 may further include a communication bus 202 and a memory 203.

The processor 201 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 701 may be another apparatus having a processing function, for example, a circuit, a device, or a software module. This is not limited.

The communication bus 202 is configured to connect different components in the communication apparatus 200, so that the different components can communicate with each other. The communication bus 202 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one thick line is used to represent the bus in FIG. 2, but this does not mean that there is only one bus or only one type of bus.

The communication interface 204 is configured to communicate with another device or a communication network. For example, the communication interface 204 may be a module, a circuit, a transceiver, or any apparatus that can implement communication. Optionally, the communication interface 204 may alternatively be an input/output interface located in the processor 201, and is configured to implement a signal input and a signal output of the processor.

The memory 203 may be an apparatus having a storage function, and is configured to store instructions and/or data. The instructions may be computer programs.

For example, the memory 203 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital universal optical disc, a Blu-ray optical disc, and the like), a magnetic disk storage medium or another magnetic storage device, or the like. This is not limited.

It should be noted that the memory 203 may exist independently of the processor 201, or may be integrated with the processor 201. The memory 203 may be located inside the communication apparatus 200, or may be located outside the communication apparatus 200. This is not limited. The processor 201 may be configured to execute the instructions stored in the memory 203, to implement methods provided in the following embodiments of this application.

In an optional implementation, the communication apparatus 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive an input from a user in a plurality of manners. For example, the input device 206 may be a mouse, a keyboard, a touchscreen device, or a sensor device.

It should be noted that a structure shown in FIG. 2 does not constitute a specific limitation on the network device or the terminal device. For example, in some other embodiments of this application, the network device or the terminal device may include more or fewer components than those shown in the figure, or some components may be combined, or some components may be split, or the components may be differently arranged. The components shown in the figure may be implemented by hardware, software, or a combination of software and hardware.

In an NR technology, a technology in which a RAN manages a UE context and is responsible for partial mobility management includes mobility management of a terminal in an RRC_inactive state. An RRC_INACTIVE state (radio resource control-inactive state) can be changed only from an RRC_CONNECTED state (radio resource control-connected state) by using an RRC release message. When UE is released from the RRC_CONNECTED state to the RRC_INACTIVE state, a base station allocates an identifier, namely, an I-RNTI (inactive radio network temporary identifier), to the UE, and manages a UE context by using the identifier. The base station is also referred to as a last serving gNB (last serving gNB) of the UE, and is sometimes denoted as an anchor gNB (anchor gNB). When the UE requests to resume a previously suspended RRC connection or update an RNA, the UE sends an RRCResumeRequest message to a current base station. An INACTIVE UE supports an RRC resume procedure. The RRC resume procedure may be used in the following cases: The UE needs to perform transmission of data or signaling, the UE needs to send a management area update (including a periodic update and an update upon removal from a location management area), and the UE receives a paging message. When controlling the UE to enter an INACTIVE state, the network device configures a UE context ID (an I-RNTI) for the UE. The UE context ID is used to identify the UE. In 5G, a paging identifier may be a 5G-S-TMSI (used by an idle UE) or the I-RNTI. The 5G-S-TMSI has a function similar to that of an S-TMSI used in LTE, and is used for paging on a core network side (5GC paging). A gNodeB does not store 5G-S-TMSI information. A new paging identifier is required for RAN paging. Therefore, the I-RNTI is introduced. To page a specific UE, a RAN side delivers a paging message including an I-RNTI of the UE to all cells in an RNA in which the UE is located. If the UE, after receiving the paging message, finds that the I-RNTI matches the paging message, the UE initiates an RRC resume procedure to transit to the RRC_CONNECTED state.

The RRC resume procedure is as follows:
1. The UE sends an RRC connection resume request to the network device, where the RRC connection resume request carries a UE context ID.
2. After receiving the UE context ID, the network device determines, based on the context ID, a network device in which a UE context is located, and sends a UE context obtaining request to the network device, to obtain a UE context from the network device, and resume a connection for the UE based on the UE context.
3. The network device sends a connection resume message to the UE, where encryption and integrity protection are performed on the resume message by using a key transferred by an old network device. The old network device may also be referred to as a last serving cell (last serving cell), an anchor (anchor) base station, or a base station in which the UE context is located.
4. When receiving the resume message, the UE performs integrity verification and decryption by using a derived key.

The following describes related designs of I-RNTIs. Currently, a protocol specifies two types of I-RNTIs: One is a full I-RNTI (Full I-RNTI), and the other is a short I-RNTI (short I-RNTI). Currently, a length of an I-RNTI carried in RRC Resume over an air interface is 40 bits or 24 bits. A length of the I-RNTI that can be used to identify an NG-RAN address is 16 to 20 bits or 6/8/12/15/18/21 bits. The following two required I-RNTI formats are recommended in a current standard.

**Table 1 I-RNTI reference configuration**

| Profile ID | UE specific reference/UE context ID/index | NG-RAN node address index (e.g., gNB ID, eNB ID) | RAT-specific information | PLMN-specific information |
|---|---|---|---|---|
| 1 | 20 bits (~1 million values) | 20 bits (~1 million values) | N/A | N/A |
| 2 | 20 bits (~1 million values) | 16 bits (65.000 nodes) | N/A | 4 bits (Max 16 PLMNs) |
| 3 | 24 bits (16 million values) | 16 bits (65.000 nodes) | N/A | N/A |

**Table 2 Full I-RNTI configuration**

| I-RNTI profile identity | I-RNTI profile value (binary encoding) | UE specific reference/UE context ID/index | NG-RAN node address index |
|---|---|---|---|
| 0 | 0b00 | 17 bits | 21 bits |
| 1 | 0b01 | 20 bits | 18 bits |
| 2 | 0b10 | 23 bits | 15 bits |
| 3 | 0b11 | 26 bits | 12 bits |

**Table 3 Short I-RNTI configuration**

| I-RNTI profile identity | I-RNTI profile value (binary encoding) | UE specific reference/UE context ID/index | NG-RAN node address index |
|---|---|---|---|
| 0 | 0b0 | 10 bits | 8 bits |
| 1 | 0b1 | 12 bits | 6 bits |

An I-RNTI structure that can be used by a base station in R17 and later versions:
- the first part (starting from the MSB of the I-RNTI) identifies the I-RNTI profile. It is 2 bits long for a Full I-RNTI or 1 bit long for a short I-RNTI, and it indicates the length of a Local NG-RAN Node Identifier of the NG-RAN Node that allocated the I-RNTI;
- the second part, immediately following the first part, is a Local NG-RAN Node Identifier;
- the third part, immediately following the second part, identifies the UE context stored in the NG-RAN node that allocated the I-RNTI.

The I-RNTI is only applicable to the RRC_INACTIVE (INACTIVE) state. Compared with other RNTIs, the I-RNTI is not used to scramble CRC. The I-RNTI is used by a base station to address UE in RRC signaling. The I-RNTI can uniquely identify one UE only within an RNA range. After the UE changes the RNA, the I-RNTI needs to be obtained again. In an R17 protocol, it is defined that a gNB ID part in the I-RNTI may be based on Xn interface interaction, a length of a gNB ID in an I-RNTI generated by each gNB is specified as 6/8/12/15/18/21 bits, and a specific corresponding gNB ID, for example, the gNB ID being 110101, is specified. Based on Xn interaction, the gNB ID in the I-RNTI generated by each gNB may be determined between gNBs, so that a corresponding gNB may be indexed when a terminal device context is expected to be searched for.

An RRC resume request is transmitted in a RACH procedure, is carried in a message 3 (MSG 3), and is sent by using an SRB 0. Because the MSG 3 cannot be segmented, the MSG 3 has to be transmitted by using a single transport block. For this reason, a message size needs to be kept small, to ensure reliable reception when the UE is at a cell edge. According to a current protocol design, when the short I-RNTI is used, the RRC Resume Request message is 48 bits, and may be transmitted by using a single transport block.

According to the current protocol design, a size of the RRC Resume Request1 message that includes the full I-RNTI is 64 bits. Therefore, the message requires good coverage for reliable reception. The full I-RNTI is generally used for indoor or small-cell deployment with mostly good coverage conditions.

In a current NR design, the UE does not perceive bits in the I-RNTI that are the gNB ID part and bits that are a UE context ID part. A specific division manner is perceived only between base stations. The UE only knows an I-RNTI of the UE, for example, 110101010001010010010100 and 1101010111010101000110110101010001100100. The UE can only report either the full I-RNTI or the short I-RNTI in the MSG 3.

A UE context that is queried for is mainly related to a UE resume scenario. A UE context transfer (Retrieve UE Context) procedure is used as follows: After the UE is resumed in a new base station, the new base station determines an old base station based on the I-RNTI, and sends an I-RNTI carried in a RETRIEVE UE CONTEXT REQUEST to the old base station for the old base station to query for a corresponding UE context and feeds back the UE context in a RETRIEVE UE CONTEXT RESPONSE.

In the current NR design, the gNB ID in the I-RNTI is a base station identifier only for a base station with an Xn connection, and a maximum length of the gNB ID is 21 bits. However, a length of a global (global) gNB ID ranges from 22 bits to 32 bits. In other words, in the existing NR design, a length of the gNB ID in the I-RNTI is insufficient to identify a base station identifier of a base station without an Xn connection. In addition, in a future network, as a quantity of base stations increases, a quantity of bits of the globe gNB ID may further increase, and it is more difficult to identify a unique base station by using the base station ID in the I-RNTI. In addition, in consideration of coverage, a length of the MSG 3 sent by the UE is limited, and it is difficult to increase a length of the I-RNTI and the length of the MSG 3.

In a network architecture using the SBA described above, a similar mobility management manner for an inactive terminal device may be used. This is because base stations can access a service-based interface or a service-based bus, to be specific, the base stations can communicate with each other based on the service-based interface, and the base stations can address each other. In this case, an identifier is required to enable the base station to find a UE context in any base station within a network-wide range. Based on identification information, when the UE enters a connected state in any base station, the base station can directly find a base station in which the UE context is located. There is no need to design whether the UE is within an RNA range or consider whether there is an Xn interface between two base stations.

An example method is as follows: After the UE accesses a new base station (also referred to as a target base station), the new base station triggers query for or requests UE context information from an old base station. The new base station may directly send a message (for example, a RETRIEVE UE CONTEXT REQUEST in NR or a new message) to the old base station, or the new base station may use an intermediate network element to forward a message (where for example, the new base station first sends a message to a network element that assists in managing a UE context, and the network element forwards the message from the new base station, or the new base station first queries a message from an auxiliary management network element (for example, an NRF) for information about the old base station, and then the new base station sends a message to the old base station). Then, the old base station identifies UE identification information, and sends a corresponding UE context to the new base station.

However, a prerequisite of the foregoing solution is that one terminal can be uniquely indicated in a network based on UE identification information. This is inconsistent with that an I-RNTI in current mobility management in an inactive state uniquely identifies a terminal only in a base station or an RNA. If an identifier is designed to index a unique UE within a network-wide range, one solution is to extend the UE identification information, for example, a length of an I-RNTI, to completely reflect identification information of a gNB. This causes newly designed identification information to exceed a maximum length of 40 bits of the I-RNTI supported by existing NR.

This application provides a terminal device identification method. A first network device sends, to a terminal device, a unique terminal device identifier used to retrieve the terminal device within a network-wide range. The terminal device identifier may be referred to as an enhanced inactive radio network temporary identifier (eI-RNTI). After receiving the unique terminal device identifier used to retrieve the terminal device within the network-wide range, the terminal device may send different parts or information of the terminal device identifier in different phases when subsequently setting up a connection to a second network device, so that the network accurately identifies and finds the terminal device within the network-wide range.

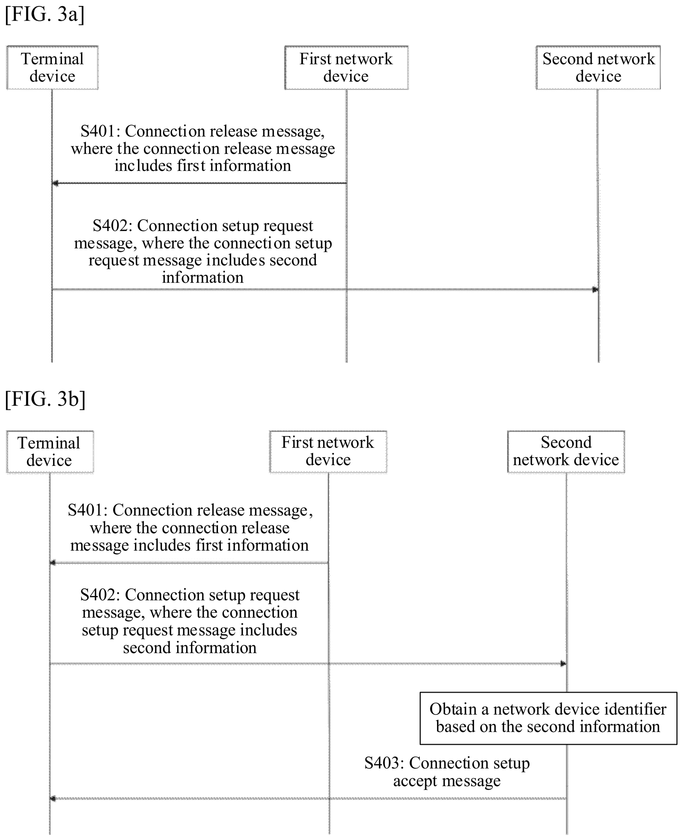

The following describes an embodiment of the present invention with reference to FIG. 3a to FIG. 3c.

FIG. 3a shows a terminal device identification method according to the present invention. The method includes the following steps.

S401: A first network device sends a connection release message to a terminal device, where the connection release message includes first information, the first information indicates the terminal device, and the first information is used to identify the first network device within a first range.

Specifically, the connection release message may be an RRC release message, or another type of connection release message. A name of the message is not limited. For example, the name of the message may be a reconfiguration message or a configuration message.

Specifically, that the first information indicates the terminal device includes: The first information is used to identify the terminal device, or the first information is used to address the terminal device.

Specifically, the first information includes information used to identify a network device and information used to identify the terminal device. The information used to identify the network device may further include information used to identify the network device within the first range and information used to identify the network device within a second range. In some embodiments, the information used to identify the network device may be 32 bits, where the first 21 bits may be used to identify the network device within the second range, and the last 22 to 32 bits are used to identify the network device within the first range. In some other embodiments, the information used to identify the network device may be 32 bits, where the first 21 bits may be used to identify the network device within the second range, and the last 22 to 32 bits and the first 21 bits are used together to identify the network device within the first range.

It should be noted that the first range is greater than the second range. For example, the first range may be a global range or a network-wide range, and the global range or the network-wide range may be a range of a public land mobile network (PLMN) or a carrier network. The second range is a local range, and the local range may be a local RNA area, for example, a set of several base stations. For example, the first range includes base stations 1, 2, 3, and 4, and the second range includes only the base stations 1 and 2. That the first range is greater than the second range may be understood as that the first range includes the second range, or the first range contains the second range.

In some embodiments, the first information may be described as an enhanced inactive radio network temporary identifier (eI-RNTI), and the first information may be composed in the following manners:
1.First part of a network device identifier, second part of the network device, and terminal context identifier (UE context ID)

The network device identifier may be a gNB ID or an eNB ID. The first part of the network device identifier may be a global part of the network device identifier or a part other than the second part of the network device identifier, and the second part of the network device identifier may be a local part of the network device identifier. The first part of the network device identifier may be used to identify the network device within the first range, or the first part of the network device identifier and the second part of the network device identifier may be used to identify the network device within the first range. The second part of the network device identifier may be used to identify the network device within the second range. The UE context ID may be used to identify or index the terminal device.

The first part of the network device identifier, the second part of the network device, and the terminal context identifier (UE context ID) may be separately sent by using different information elements (information elements, IEs). A specific format is as follows:

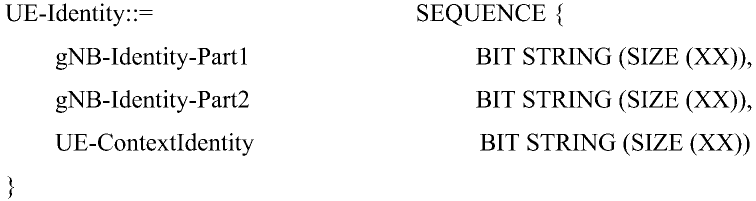

### 2. Complete network device identifier and UE context ID

The network device identifier may be a gNB ID or an eNB ID. The complete network device identifier may be used to identify the network device within the first range. The UE context ID may be used to identify the terminal device. A specific format is as follows:

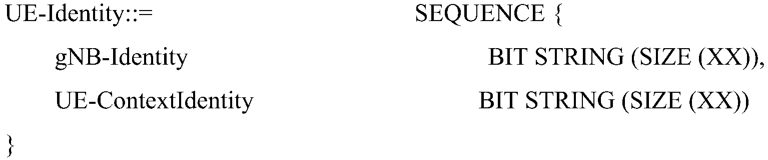

### 3. A profile identity (Profile ID) indicates a composition form of the first information, a corresponding part of the network device identifier, and the UE context ID.

The profile ID may indicate different composition forms of the first information and a corresponding part of the network device identifier. For example, as shown in the first row of the full I-RNTI configuration shown in Table 2, when a value of the profile ID is 0b00, the network device identifier is 21 bits. The profile ID may indicate the complete network device identifier, or may separately indicate the first part of the network device identifier and the second part of the network device identifier. Specifically, the profile ID may be placed in a first part of all bits, for example, the first four bits of 50 bits, or placed in the first four bits of the last 40 bits of the 50 bits. A format is as follows:

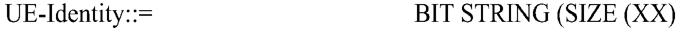

In textual descriptions in a protocol, the first X bits are described as the profile ID.

Alternatively,

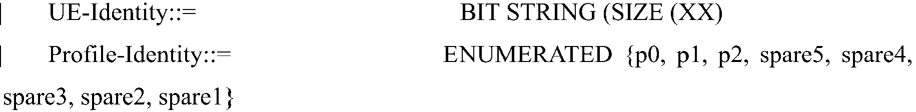

The composition form of the first information is indicated by using an independent information element.

### 4.First part of the network device identifier and I-RNTI

The network device identifier may be a gNB ID or an eNB ID. The first part of the network device identifier may be a global part of the network device identifier. The I-RNTI may include the second part of the network identifier and the UE context ID. The first part of the network device identifier may be used to identify the network device within the first range, or the first part of the network device identifier and the second part of the network device identifier may be used to identify the network device within the first range. The second part of the network device identifier may be used to identify the network device within the second range. The UE context ID may be used to identify the terminal device. A specific format is as follows:

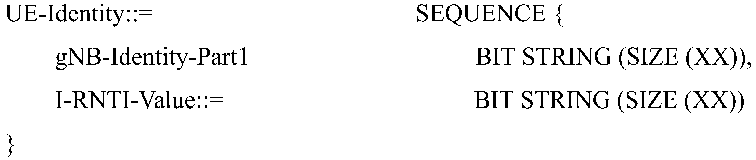

In some embodiments, information included in the foregoing four manners may be included in the first information, but a name of the information included in the foregoing four manners is not limited. The name may be another name other than the eI-RNTI. This is not limited in the present invention.

In some embodiments, the UE context ID may alternatively be a terminal identifier or a terminal index.

S402: The terminal device sends a connection setup request message to a second network device, where the connection setup request message includes second information, the second information is used to identify the first network device within the second range, and the second range is less than the first range. That the second range is less than the first range may be understood as that the first range includes the second range, or the first range contains the second range.

Specifically, the connection setup request message may be an RRC resume request message, another type of connection setup message, or another message. This is not limited either.

Specifically, the second information includes the information used to identify the network device and the information used to identify the terminal device. The information used to identify the network device may further include the information used to identify the network device within the second range. In some embodiments, the information used to identify the network device may be 21 bits, and the 21 bits may be used to identify the network device within the second range.

It should be noted that the first range is greater than the second range. For example, the first range may be a global range, a network-wide range, or a worldwide range, and the global range or the network-wide range may be a range of a public land mobile network (PLMN), a group of PLMNs, or a carrier network. The second range is a local range, and the local range may be a local RNA area or a set of a plurality of base stations.

In some embodiments, the second information may be one of the following:

### 1. Inactive radio network temporary identifier (I-RNTI)

The I-RNTI may include a second part of a network device identifier and a UE context ID. The network device identifier may be a gNB ID or an eNB ID. The second part of the network device identifier may be a local part of the network device identifier, and the second part of the network device identifier may be used to identify the network device within the second range. The UE context ID may be used to identify the terminal device. The I-RNTI may be 40 bits. The identifier may alternatively be an identifier with another name that has a format, content, or information the same as that of the I-RNTI. Each I-RNTI mentioned in the present invention may be an identifier with another name that has a format, content, or information the same as that of the I-RNTI.

### 2. Second part of the network device identifier and UE context ID

The network device identifier may be a gNB ID or an eNB ID. The second part of the network device identifier may be the local part of the network device identifier, and the second part of the network device identifier may be used to identify the network device within the second range. The UE context ID may be used to identify the terminal device.

### 3.First part of the first information

The first part of the first information is used to identify the terminal device within the second range. The first part of the first information may include the second part of the network device identifier and the UE context ID. The network device identifier may be a gNB ID or an eNB ID. The second part of the network device identifier may be the local part of the network device identifier, and the second part of the network device identifier may be used to identify the network device within the second range. The UE context ID may be used to identify the terminal device.

In some embodiments, after receiving the first information from the first network device, the terminal device may obtain the second information based on the first information. Specifically, the terminal device may identify the first information, and obtain the second information from the first information, or may generate the second information based on the first information. For example, if the first information is sending different parts of the eI-RNTI by using different information elements, the UE may identify the first part of the network device identifier, the second part of the network device, and the UE context ID based on the received information elements, to send, to the second network device, the second part of the network device and the UE context ID that are used as the second information. In another example, if the first information is using a profile identity (Profile ID) to indicate a composition form of an RNTI, a corresponding part of the network device identifier, and the UE context ID, the terminal device may find, from the first information by using the profile ID, the second part of the network device identifier and the UE context ID, to send, to the second network device, the second part of the network device identifier and the UE context ID that are used as the second information.

In some embodiments, a type, a manner, content, or a format of the second information in the second message sent by the terminal device to the second network device may be generated based on indication information of a system message. For example, the system message indicates the terminal device to send the second information based on the second part of the network device identifier and the UE context ID. The system message may be a message like a SIB 1 or a MIB.

According to the foregoing method, the terminal device receives the first information sent by the first network device. The first information may be used to identify the first network device within the global range. Some or all information in the first information may be used by the terminal device to retrieve a terminal device identifier of a unique UE within the network-wide range when a connection is subsequently set up between the terminal device and another network device (for example, the second network device). In this case, the another network device (for example, the second network device) can accurately identify and find the terminal device within the network-wide range.

FIG. 3b shows another terminal device identification method according to the present invention. The method includes the following steps.

S401: A first network device sends a connection release message to a terminal device, where the connection release message includes first information, the first information indicates the terminal device, and the first information is used to identify the first network device within a first range.

S402: The terminal device sends a connection setup request message to a second network device, where the connection setup request message includes second information, the second information is used to identify the first network device within a second range, and the second range is less than the first range.

For related descriptions of S401 and S402, refer to FIG. 3a and related paragraphs. Details are not described herein again.

S403: The second network device receives the connection setup request message, where the connection setup request message includes the second information, the second information is used to identify the first network device within the second range, the second network device obtains a network device identifier based on the second information, and the second network device sends a connection setup accept message to the terminal device.

Specifically, if the second network device can find the first network device within the second range based on the second information, for example, the second network device can resume a network device identifier that is of an I-RNTI and that is included in the second information, the second network device sends the connection setup accept message to the terminal device.

Specifically, the second network device queries for or requests a terminal device context from the first network. After the request succeeds, the second network device sends the connection setup accept message to the terminal device. More specifically, the second network device may obtain the terminal device context from the first network based on an Xn interface or a service-based interface, or query for the first network device from another network element or apparatus, and then send signaling to the first network device, or forward the signaling based on another network device or apparatus.

Specifically, the connection setup accept message may be an RRC resume message.

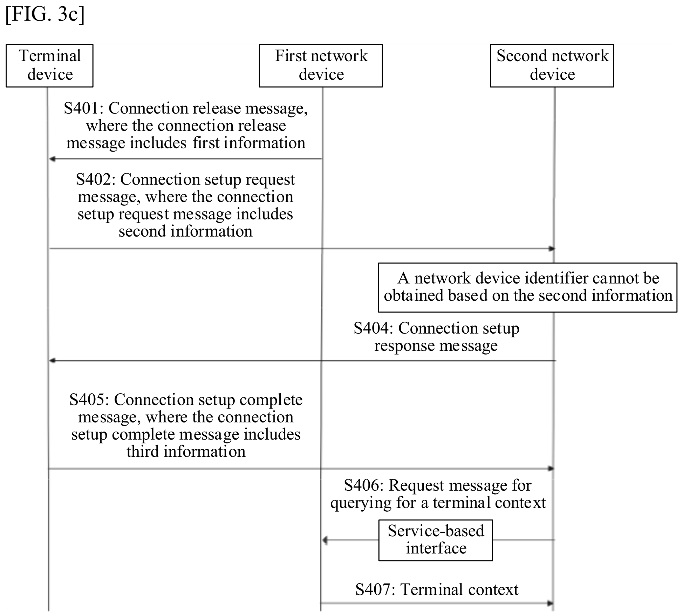

FIG. 3c shows still another terminal device identification method according to the present invention. The method includes the following steps.

S401: A first network device sends a connection release message to a terminal device, where the connection release message includes first information, the first information indicates the terminal device, and the first information is used to identify the first network device within a first range.

S402: The terminal device sends a connection setup request message to a second network device, where the connection setup request message includes second information, the second information is used to identify the first network device within a second range, and the second range is less than the first range.

For related descriptions of S401 and S402, refer to FIG. 3a and related paragraphs. Details are not described herein again.

S404: The second network device receives an access request message, where the access request message includes the second information, the second information is used to identify the first network device within the second range, and when the second network device cannot obtain a network device identifier based on the second information or fails to address the second network device, the second network device sends a connection setup response message to the terminal device, where the connection setup response message indicates the terminal device to send information used to identify the first network device within the first range, and the second range is less than the first range.

Specifically, if the second network device cannot find the first network device within the second range based on the second information, for example, the second network device cannot resume a network device identifier that is of an I-RNTI and that is included in the second information, the second network device sends the connection setup response message to the terminal device. The connection setup response message indicates the terminal device to send the information used to identify the first network device within the first range, and the second range is less than the first range. Because the second network device cannot find the first network device within the second range, for example, the second network device cannot find the first network device within a local range, the second network device may send the connection setup response message to the terminal device. The message may indicate the terminal device to send, to the second network device, the information used to identify the first network device within the first range. For example, the first range may be a global range.

Specifically, the connection setup response message may be an RRC setup message. In some embodiments, the connection setup response message may indicate that access succeeds, but the terminal device still needs to additionally report another part of the network device identifier.

S405: The terminal device receives the connection setup response message, and sends a connection setup complete message to the second network device, where the connection setup complete message includes third information, and the third information is used to identify the first network device within the first range. The connection setup complete message is not limited.

Specifically, the third information is used to identify the first network device within the global range. Specifically, the third information may be one of the following:

### 1. Part other than a first part of the first information

The first part of the first information may be used to identify the first network device within the second range. Because the second network device has obtained the first part of the first information from the second information, after obtaining a part other than a first part of an el-RNTI by using the third information, the second network device may obtain the complete first information. The complete first information may be used to identify the first network device within the first range.

### 2.First part of the network device identifier

The network device identifier may be a gNB ID or an eNB ID. The first part of the network device identifier may be a global part of the network device identifier. The first part of the network device identifier may be used to identify a network device within the first range, or the first part of the network device identifier and a second part of the network device identifier may be used to identify the network device within the first range. Alternatively, the first part of the network device identifier may be a part other than the second part of the network device identifier.

### 3.First information

Because a quantity of bits that can be sent in the connection setup complete message is not limited, the third information may alternatively be the complete first information. The complete first information may be used to identify the first network device within the first range.

Specifically, the connection setup complete message may be an RRC setup complete message, and the connection setup complete message may be carried in a message 5 (Msg5).

S406: The second network device receives the connection setup response message, and sends, through a service-based interface, a request message for querying for a terminal context (UE context) to the first network device.

Specifically, the service-based interface (service-based interface) may be an interface among the second network device, the first network device, and another network element, for example, an NgNB (Service-based interface exhibited by gNB).

Specifically, the request message for querying for the UE context may include one or more of a UE context ID, the I-RNTI, and the eI-RNTI of the terminal device.

S407: The first network device receives the request message for querying for the UE context, and sends the UE context of the terminal device to the second network device.

Specifically, the first network device receives one or more of the UE context ID, the I-RNTI, and the eI-RNTI that are carried in the request message that is for querying for the UE context and that is sent by the second network device, so that the UE context of the terminal device can be found. After the UE context of the terminal device is found, the UE context of the terminal device may be sent to the second network device.

It should be noted that information included in the first message, the second message, and the third message may be randomly combined. For example, when the first message is the complete network device identifier and the UE context ID, the second message may be the I-RNTI, or may be the second part of the network device identifier and the UE context ID, and the third message may be the part other than the first part of the eI-RNTI, or may be the first part of the network device identifier. In the case of different combinations, the terminal device may report a part of the network device identifier in the second information, and then report another part of the network device identifier or the complete network device identifier in the third information. To be specific, the terminal device sends a part of the network device identifier by using the second information, and sends another part of the network device identifier by using the third information. Finally, the second network device may combine the network device identifier in the second information and the network device identifier in the third information, to obtain the complete network device identifier.

It should be noted that, in any combination described above, for example, when the first information is the complete network device identifier and the UE context ID, or the first part of the network device identifier and the I-RNTI, some combinations require the terminal device to perceive a bit division and usage status in the eI-RNTI. For example, when the first information is using a profile identity to indicate a composition form of an RNTI, a corresponding part of the network device identifier, and the UE context ID, some combinations do not require the terminal device to perceive the bit division and usage status in the eI-RNTI, and the terminal device may obtain content in the first information based on a quantity of truncated bits.

According to the foregoing method, the terminal device receives the first information sent by the first network device. The first information may be used to identify the first network device within the global range. When a connection is set up between the terminal device and the second network device, the terminal device may first send the second information used to identify the first network device within the local range. If the second network device can obtain a first network identifier, the connection succeeds. If the second network device cannot obtain the first network identifier, the terminal device sends, to the second network device, the third information used to identify the first network device within the global range. In this case, the second network device can accurately address the terminal device context within a network-wide range, or obtain the terminal device context.

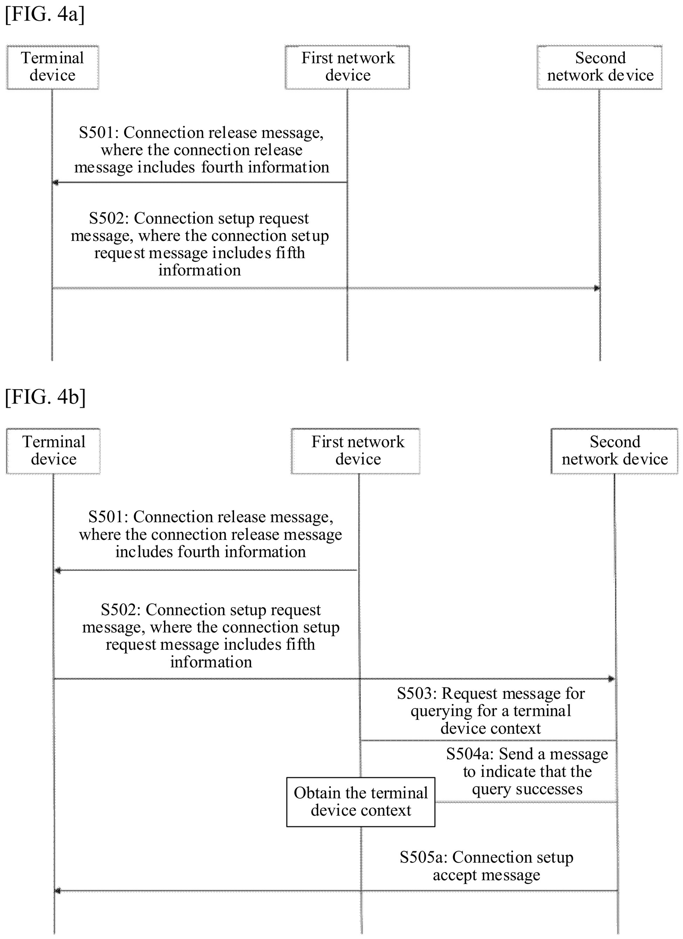

The following describes another embodiment of the present invention with reference to FIG. 4a to FIG. 4c.

S501: A first network device sends a connection release message to a terminal device, where the connection release message includes fourth information, the fourth information indicates the terminal device, and the fourth information is used to identify the first network device within a first range.

Specifically, the connection release message may be an RRC release message, or another type of connection release message. A name of the message is not limited. For example, the name of the message may be a reconfiguration message or a configuration message.

Specifically, that the fourth information indicates the terminal device includes: The fourth information is used to identify the terminal device, and first information is used to address the terminal device.

Specifically, the fourth information includes information used to identify a network device and information used to identify the terminal device. The information used to identify the network device may further include information used to identify the network device within the first range and information used to identify the network device within a second range. In some embodiments, the information used to identify the network device may be 32 bits, where the first 21 bits may be used to identify the network device within the second range, and the last 22 to 32 bits are used to identify the network device within the first range. In some other embodiments, the information used to identify the network device may be 32 bits, where the first 21 bits may be used to identify the network device within the second range, and the last 22 to 32 bits and the first 21 bits are used together to identify the network device within the first range.

It should be noted that the first range is greater than the second range. For example, the first range may be a global range or a network-wide range, and the global range or the network-wide range may be a range of a public land mobile network (PLMN) or a carrier network. The second range is a local range, and the local range may be a local RNA area, for example, a set of several base stations. For example, the first range includes base stations 1, 2, 3, and 4, and the second range includes only the base stations 1 and 2. That the first range is greater than the second range may be understood as that the first range includes the second range, or the first range contains the second range.

In some embodiments, the fourth information may be described as an enhanced inactive radio network temporary identifier (eI-RNTI), and the fourth information may be composed in the following manners:

### 1.Network device identifier, first part of a terminal context identifier (UE context ID), and second part of the UE context ID

The network device identifier may be a gNB ID or an eNB ID. The network device identifier may be used to identify the network device within the first range. The UE context ID may be used to identify or index the terminal device.

2. The network device identifier, the first part of the UE context ID, and the second part of the UE context ID may be separately sent by using different information elements (information elements, IEs).

For a specific format, refer to the foregoing related descriptions of the first information.

### Network device identifier and complete UE context ID

The network device identifier may be a gNB ID or an eNB ID. The network device identifier may be used to identify the network device within the first range. The complete UE context ID may be used to identify the terminal device.

### 3.Profile identity (Profile ID) indicating a composition form of an RNTI, corresponding part of the UE context ID, and network device identifier

The profile ID may indicate different composition forms of the RNTI and a corresponding part of a terminal device identifier. For example, as shown in the first row of the full I-RNTI configuration shown in Table 2, when a value of the profile ID is 0b00, the terminal device identifier is 21 bits. The profile ID may indicate the complete terminal device identifier, or may separately indicate a first part of the terminal device identifier and a second part of the terminal device identifier. Specifically, the profile ID may be placed in a first part of all bits, for example, the first four bits of 50 bits, or placed in the first four bits of the last 40 bits of the 50 bits.

### 4. UE context ID and I-RNTI

It should be noted that the I-RNTI herein includes only the first part of the UE context ID and the network device identifier.

### 5.I-RNTI and second part of the UE context ID

In some embodiments, information included in the foregoing five manners may be included in the fourth information, but a name of the information included in the foregoing four manners is not limited. The name may be another name other than the eI-RNTI. This is not limited in the present invention.

In some embodiments, the UE context ID may alternatively be a terminal identifier or a terminal index.

S502: The terminal device sends a connection setup request message to a second network device, where the connection setup request message includes fifth information, the fifth information includes the first part of the terminal device context identifier (UE context ID), and the fifth information is used to identify the first network device within the first range.

Specifically, the connection setup request message may be an RRC resume request message, or another type of connection release message.

Specifically, the fifth information includes the information used to identify the network device and the information used to identify the terminal device. The information used to identify the network device may further include the information used to identify the network device within the first range. In some embodiments, the information used to identify the network device may be 32 bits, and the 32 bits may be used to identify the network device within the first range.

It should be noted that the first range is greater than the second range. For example, the first range may be a global range, a network-wide range, or a worldwide range, and the global range or the network-wide range may be a range of a public land mobile network (PLMN), a group of PLMNs, or a carrier network. The second range is a local range, and the local range may be a local RNA area or a set of a plurality of base stations.

The information that is included in the fifth information and that is used to identify the terminal device is the first part of the terminal device context identifier (UE context ID). In other words, the information that is included in the fifth information and that is used to identify the terminal device is an incomplete UE context ID.

In some embodiments, the fifth information may be one of the following:

### 1. Network device identifier and first part of the UE context ID

The network device identifier may be a gNB ID or an eNB ID. The network device identifier is used to identify the network device within the first range.

### 2.First part of fourth information, where a first part of the eI-RNTI includes the first part of the UE context ID

The first part of the fourth information further includes the complete network device identifier, and the network device identifier is used to identify the network device within the first range. It should be noted that the first part of the fourth information includes the first part of the UE context ID, and does not include the second part of the UE context ID. In other words, the first part of the fourth information includes the incomplete UE context ID.

In some embodiments, after receiving the fourth information from the first network device, the terminal device may obtain the fifth information based on the fourth information. Specifically, the terminal device may identify the fourth information, and obtain the fifth information from the fourth information, or may generate the fifth information based on the fourth information. For example, if the fourth information is sending different parts of the el-RNTI by using different information elements, the UE may identify the network device identifier, the first part of the UE context ID, and the second part of the UE context ID based on the received information elements, to send, to the second network device, the network device identifier and the first part of the UE context ID that are used as the fifth information. In another example, if the fourth information is using a profile identity (Profile ID) to indicate a composition form of an RNTI, the network device identifier, and a corresponding part of the UE context ID, the terminal device may find, from the fourth information by using the profile ID, the network device identifier and the first part of the UE context ID, to send, to the second network device, the network device identifier and the first part of the UE context ID that are used as the fifth information.

In some embodiments, an identifier form in the second message sent by the terminal device to the second network device may be generated based on indication information of a system message. For example, the system message indicates the terminal device to send the fifth information based on the network device identifier and the first part of the UE context ID. The system message may be a message like a SIB 1 or a MIB.

According to the foregoing method, the terminal device receives the fourth information sent by the first network device. The fourth information may be used to identify the first network device within the global range. Some or all information in the fourth information may be used by the terminal device to retrieve an identifier of the first network device within the network-wide range when a connection is subsequently set up between the terminal device and another network device (for example, the second network device). In this case, the another network device (for example, the second network device) can accurately identify and find the first network device within the network-wide range.

FIG. 4b shows another terminal device identification method according to the present invention. The method includes the following steps.

S501: A first network device sends a connection release message to a terminal device, where the connection release message includes fourth information, the fourth information indicates the terminal device, and the fourth information is used to identify the first network device within a first range.

S502: The terminal device sends a connection setup request message to a second network device, where the connection setup request message includes fifth information, the fifth information includes a first part of a terminal device context identifier (UE context ID), and the fifth information is used to identify the first network device within the first range.

For related descriptions of S501 and S502, refer to FIG. 4a and related paragraphs. Details are not described herein again.

S503: The second network device receives an access request message, where the connection setup request message includes the fifth information, the fifth information includes a first part of a terminal device identifier (UE ID), the fifth information is used to identify the first network device within the first range, the second network device obtains a network device identifier based on the fifth information, and the second network device sends a request message for querying for a terminal device context to the first network device. Querying for the terminal device context may also be referred to as obtaining the terminal device context, transferring the terminal device context, or the like, to request the terminal device context.

Specifically, the request message for querying for the terminal device context includes one of the following:
1. the first part of the terminal device context identifier (UE context ID);
2. an inactive radio network temporary identifier (I-RNTI); and
3.an enhanced inactive radio network temporary identifier (eI-RNTI).

It should be noted that the I-RNTI and the eI-RNTI include only the first part of the UE context ID, in other words, the request message for querying for the terminal device context includes only a part of the UE context ID.

S504a: The first network device receives the request message for querying for the terminal device context, and obtains the terminal device context, and the first network device sends a message to the second network device to indicate that the query succeeds.

Specifically, if the first network device can resume or retrieve a terminal device identifier in the I-RNTI or index a unique terminal device context based on a part of the UE context ID in the request message for querying for the terminal device context, the first network device sends the message to the second network device to indicate that the query succeeds. Optionally, the first network device sends the unique terminal device context to the second network device.

In some embodiments, the first network device may receive, through a service-based interface, the request message for querying for the terminal device context.

S505a: The second network device sends a connection setup accept message to the terminal device in response to the message sent by the first network device to indicate that the query succeeds.

Specifically, the connection setup accept message may be an RRC resume message.

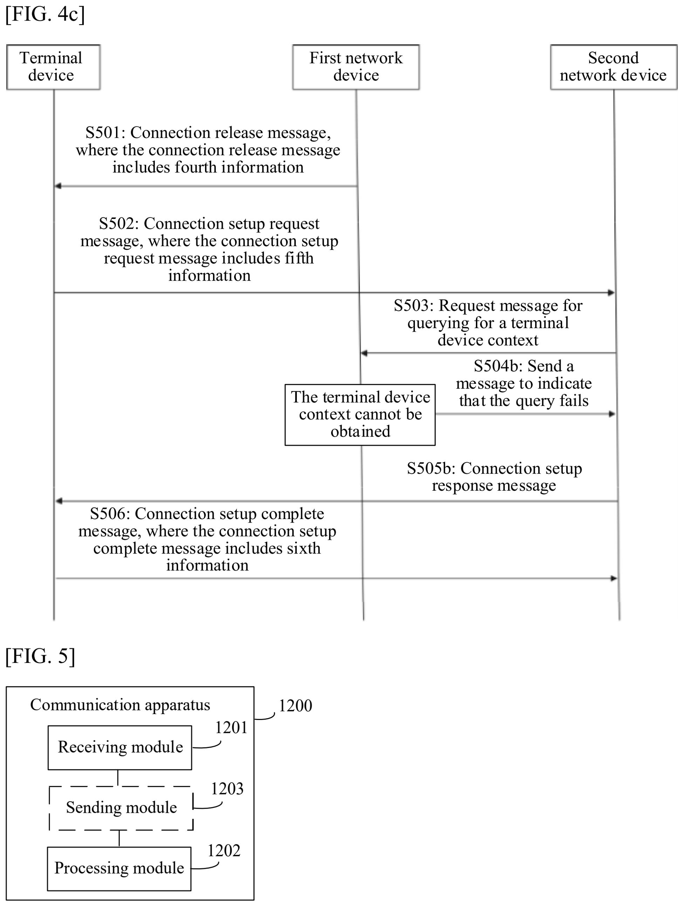

FIG. 4c shows still another terminal device identification method according to the present invention. The method includes the following steps.

S501: A first network device sends a connection release message to a terminal device, where the connection release message includes fourth information, the fourth information indicates the terminal device, and the fourth information is used to identify the first network device within a first range.

S502: The terminal device sends a connection setup request message to a second network device, where the connection setup request message includes fifth information, the fifth information includes a first part of a terminal device context identifier (UE context ID), and the fifth information is used to identify the first network device within the first range.

S503: The second network device receives an access request message, where the connection setup request message includes the fifth information, the fifth information includes a first part of a terminal device identifier (UE ID), the fifth information is used to identify the first network device within the first range, the second network device obtains a network device identifier based on the fifth information, and the second network device sends a context transfer request message to the first network device, where the context transfer message includes the fifth message.

For related descriptions of S501, S502, and S503, refer to FIG. 4a, FIG. 4b, and related paragraphs. Details are not described herein again.

S504b: The first network device receives the request message for querying for the terminal device context, but cannot obtain the terminal device context, and the first network device sends a message to the second network device to indicate that the query fails.

Specifically, if the first network device cannot resume or retrieve the terminal device identifier in an I-RNTI or index a unique terminal device context based on a part of the UE context ID in the request message for querying for the terminal device context, the first network device sends the message to the second network device to indicate that the query fails.

Optionally, the first network device may match a plurality of terminal device contexts based on a part of the UE context ID in the request message for querying for the terminal device context, to send the plurality of terminal device contexts to the second network device.

In some embodiments, the first network device may receive, through a service-based interface, the request message for the terminal device context.

S505b: The second network device sends a connection setup response message to the terminal device in response to the message sent by the first network device to indicate that the query fails, where the connection setup response message indicates the terminal device to send information including a second part of the UE context ID.

Specifically, the connection setup response message may be an RRC setup message. In some embodiments, the connection setup response message may indicate that access succeeds, but the terminal device still needs to additionally report another part of the UE context ID, for example, the second part of the UE context ID.

S506: The terminal device sends a connection setup complete message to the second network device in response to the received connection setup response message, where the connection setup complete message includes sixth information, and the sixth information includes the second part of the UE context ID.

Specifically, the sixth information includes one of the following:
1. a second part of the fourth information, where the second part of the fourth information includes the second part of the UE context ID;
2. the second part of the UE context ID; and
3. the fourth information.

It should be noted that the second part that is of the UE context ID and that is included in the sixth message and the second part that is of the UE context ID and that is included in the fourth message or the fifth message are combined to form the complete UE context ID.

Optionally, after the terminal device sends the connection setup complete message to the second network device, the second network device may send again the request message for querying for the terminal device context to the first network device. The request message for querying for the terminal device context includes the complete UE context ID, so that the first network device can resume or retrieve the terminal device identifier in the I-RNTI or index the unique terminal device context based on the complete UE context ID, to send the terminal device context to the second network device.

Optionally, when the first network device sends a plurality of terminal device contexts to the second network device, the first network device may match the plurality of terminal device contexts based on the complete UE context ID, to obtain the unique terminal device context. Optionally, the second network device may indicate the first network device to delete a unique terminal device context locally in the first network device or transfer the unique terminal device context locally in the first network device, and the first network device may continue to store another terminal device context.

According to the foregoing method, the terminal device receives the fourth information sent by the first network device. The fourth information may be used to identify the first network device within a global range. When a connection is set up between the terminal device and the second network device, the terminal device may first send second information used to identify the first network device within the global range. However, the second information includes only a part of the UE context ID. If the second network device can obtain the terminal device context by using the part of the UE context ID, the connection succeeds. If the second network device cannot obtain the terminal device context, the terminal device sends third information including the complete UE context ID to the second network device. In this case, the second network device can obtain the terminal device context.

It may be understood that, in the foregoing embodiments, the methods and/or steps implemented by a network device (including the first network device or the second network device) may alternatively be implemented by a component (for example, a chip or a circuit) that can be used in the network device. The methods and/or steps implemented by a terminal device may alternatively be implemented by a component (for example, a chip or a circuit) that can be used in the terminal device. The methods and/or steps implemented by a core network device may alternatively be implemented by a component (for example, a chip or a circuit) that can be used in the core network device.

The foregoing mainly describes the solutions provided in embodiments of this application from a perspective of interaction between the devices. Correspondingly, an embodiment of this application further provides a communication apparatus. The communication apparatus is configured to implement the foregoing methods. The communication apparatus may be the network device in the foregoing method embodiments, an apparatus including the foregoing network device, or a component that can be used in the network device. Alternatively, the communication apparatus may be the terminal device in the foregoing method embodiments, an apparatus including the foregoing terminal device, or a component that can be used in the terminal device. Alternatively, the communication apparatus may be the core network device in the foregoing method embodiments, an apparatus including the foregoing core network device, or a component that can be used in the core network device. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In an actual implementation, another division manner may be used.

FIG. 5 is a diagram of a structure of a communication apparatus 1200. The communication apparatus 1200 includes a receiving module 1201 and a processing module 1202. The receiving module may also be referred to as a receiving unit. The receiving module 1201 is configured to implement a receiving function, for example, may be a receiving circuit, a receiver, a receiver machine, or a communication interface.

For example, the communication apparatus 1200 is the terminal device in the foregoing method embodiments. In a possible design, the receiving module 1201 is configured to receive first data of a first broadcast service from a first network device through a first broadcast session. The receiving module 1201 is further configured to receive second data of the first broadcast service from a second network device through a first multicast session. The processing module 1202 is configured to determine final data of the first broadcast service based on the first data and the second data.

Optionally, the communication apparatus 1200 may further include a sending module 1203. The sending module may also be referred to as a sending unit. The sending module 1201 is configured to implement a sending function, for example, may be a transmitter circuit, a transmitter, a transmitter machine, or a communication interface.

In this embodiment, the communication apparatus 1200 is presented in a form of functional modules obtained through division in an integrated manner. The "module" herein may be a specific ASIC, a circuit, a processor that executes one or more software or firmware programs, a memory, an integrated logic circuit, and/or another device that can provide the foregoing functions.

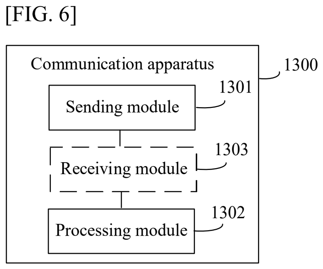

FIG. 6 is a diagram of a structure of another communication apparatus 1300. The communication apparatus 1300 includes a sending module 1301 and a processing module 1302. The sending module may also be referred to as a sending unit. The sending module 1301 is configured to implement a sending function, for example, may be a transmitter circuit, a transmitter, a transmitter machine, or a communication interface.

For example, the communication apparatus 1300 is the second network device in the foregoing method embodiments. In a possible design, the processing module 1302 is configured to set up a first multicast session, where the first multicast session is associated with a first broadcast service. The sending module 1301 is configured to transmit second data of the first broadcast service to the terminal device through the first multicast session.

Optionally, the communication apparatus 1300 may further include a receiving module 1303. The receiving module may also be referred to as a receiving unit. The receiving module 1303 is configured to implement a receiving function, for example, may be a receiving circuit, a receiver, a receiver machine, or a communication interface.

In this embodiment, the communication apparatus 1300 is presented in a form of functional modules obtained through division in an integrated manner. The "module" herein may be a specific ASIC, a circuit, a processor that executes one or more software or firmware programs, a memory, an integrated logic circuit, and/or another device that can provide the foregoing functions.

It should be noted that one or more of the foregoing modules or units may be implemented by software, hardware, or a combination thereof. When any one of the foregoing modules or units is implemented by software, the software exists in a form of computer program instructions, and is stored in the memory. The processor may be configured to execute the program instructions and implement the foregoing method procedures. The processor may be built into a SoC (system on chip) or an ASIC, or may be an independent semiconductor chip. In addition to a core that is configured to execute software instructions to perform an operation or processing, the processor may further include a necessary hardware accelerator, for example, a field programmable gate array (field programmable gate array, FPGA), a programmable logic device (programmable logic device, PLD), or a logic circuit that implements a special logic operation.

When the foregoing modules or units are implemented by using hardware, the hardware may be any one or any combination of a CPU, a microprocessor, a DSP chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software, to perform the foregoing method procedures.

Optionally, an embodiment of this application further provides a chip system, including at least one processor and an interface. The at least one processor is coupled to a memory through the interface. When the at least one processor executes a computer program or instructions in the memory, the method in any one of the foregoing method embodiments is performed. In a possible implementation, a communication apparatus further includes the memory. Optionally, the chip system may include a chip, or may include a chip and another discrete device. This is not specifically limited in embodiments of this application.

All or some of the foregoing embodiments may be implemented by software, hardware, firmware, or any combination thereof. When a software program is used to implement the foregoing embodiments, all or some of the foregoing embodiments may be implemented in a form of a computer program product.

This application provides a computer program product, including one or more computer instructions. When the one or more computer instructions are run on a communication apparatus, any one of the methods in embodiments of this application is performed.

When the computer program instructions are loaded and executed on a computer, all or some of the procedures or functions according to embodiments of this application are generated. The computer may be a general-purpose computer, a special-purpose computer, a computer network, or another programmable apparatus.

The computer instructions may be stored in a computer-readable storage medium. An embodiment of this application provides a computer-readable storage medium. The computer-readable storage medium stores instructions. When the instructions are run on a communication apparatus, any one of the methods in embodiments of this application is performed.

The computer instructions may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, the disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and the accompanying drawings are merely example descriptions of this application defined by the appended claims, and are considered as any of or all modifications, variations, combinations, or equivalents that cover the scope of this application. This application is intended to cover these modifications and variations of this application provided that they fall within the scope of the claims of this application and equivalent technologies thereof.

## Claims

1. A data transmission method, wherein the method comprises:
receiving, by a terminal device, a connection release message sent by a first network device, wherein the connection release message comprises first information, the first information indicates the terminal device, and the first information is used to identify the first network device within a first range; and
sending, by the terminal device, a connection setup request message to a second network device, wherein the connection setup request message comprises second information, the second information is used to identify the first network device within a second range, and the second range is less than the first range.

2. The method according to claim 1, wherein the method further comprises:
receiving, by the terminal device, a connection setup response message, wherein the connection setup response message indicates the terminal device to send information used to identify the first network device within the first range; and
sending, by the terminal device, a connection setup complete message, wherein the connection setup complete message comprises third information, and the third information is used to identify the first network device within the first range.

3. The method according to claim 1, wherein the method further comprises: receiving, by the terminal device, a connection setup accept message.

4. The method according to any one of claims 1 to 3, wherein the first information and the second information are further used to identify a terminal device context (UE Context).

5. The method according to any one of claims 1 to 4, wherein the first information comprises one of the following:
an enhanced inactive radio network temporary identifier (eI-RNTI);
a first part of a network device identifier, a second part of the network device identifier, and a terminal device context identifier (UE context ID);
an inactive radio network temporary identifier (I-RNTI) and the network device identifier; and
the I-RNTI and the first part of the network device identifier, wherein
the first part of the network device identifier and the second part of the network device identifier are used to identify the first network device within the first range, and the second part of the network device identifier is used to identify the first network device within the second range.

6. The method according to claims 1 to 4, wherein the second information comprises one of the following:
an I-RNTI;
a second part of a network device identifier and a UE context ID; and
a first part of the first information, wherein the first part of the first information is used to identify the terminal device within the second range, wherein
the second part of the network device identifier is used to identify the first network device within the second range.

7. The method according to claim 2, wherein the third information comprises one of the following:
a part other than a first part of the first information, wherein the first part of the first information is used to identify the first network device within the second range;
a first part of a network device identifier; and
the first information, wherein
the first part of the network device identifier and a second part of the network device identifier are used to identify the first network device within the first range.

8. A data transmission method, wherein the method comprises:
receiving, by a terminal device, a connection release message sent by a first network device, wherein the connection release message comprises fourth information, the fourth information indicates the terminal device, and the fourth information is used to identify the first network device within a first range; and
sending, by the terminal device, a connection setup request message to a second network device, wherein the connection setup request message comprises fifth information, the fifth information comprises a first part of a terminal device context identifier (UE context ID), and the fifth information is used to identify the first network device within the first range.

9. The method according to claim 8, wherein the method further comprises:
receiving a connection setup response message, wherein the connection setup response message indicates the terminal device to send information comprising a second part of the UE context ID; and
sending a connection setup complete message, wherein the connection setup complete message comprises sixth information, and the sixth information comprises a second part of a UE ID.

10. The method according to claim 8, wherein the method further comprises:
receiving a connection setup accept message.

11. The method according to any one of claims 8 to 10, wherein the fourth information comprises one of the following:
an enhanced inactive radio network temporary identifier (eI-RNTI);
a network device identifier, the first part of the UE context ID, and the second part of the UE context ID; and
an inactive radio network temporary identifier (I-RNTI) and the UE context ID.

12. The method according to any one of claims 8 to 10, wherein the fifth information comprises one of the following:
a network device identifier and the first part of the UE context ID; and
a first part of the fourth information, wherein the first part of the fourth information
comprises the first part of the UE context ID.

13. The method according to claim 9, wherein the sixth information comprises one of the following:
a second part of the fourth information, wherein the second part of the fourth information comprises the second part of the UE context ID;
the second part of the UE context ID; and
the fourth information.

14. A data transmission method, wherein the method comprises:
sending, by a first network device, a connection release message, wherein the connection release message comprises first information, and the first information is used to identify the first network device within a first range;
receiving, by the first network device through a service-based interface, a request message that is for querying for a terminal device context (UE context) and that is sent by a second network device; and
sending, by the first network device, a UE context of a terminal device to the second network device.

15. The method according to claim 14, wherein the request message for querying for the terminal device context comprises one of the following:
a terminal device context identifier (UE context ID) of the terminal device;
an inactive radio network temporary identifier (I-RNTI); and
an enhanced inactive radio network temporary identifier (eI-RNTI).

16. A data transmission method, wherein the method comprises:
sending, by a first network device, a connection release message, wherein the connection release message comprises fourth information, and the fourth information is used to identify the first network device within a first range;
receiving, by the first network device through a service-based interface, a request message that is for querying for a terminal device context (UE context) and that is sent by a second network device;
when the first network device finds the UE context, sending, by the first network device, a message to the second network device to indicate that the query succeeds; and
when the first network device cannot find the UE context, sending, by the first network device, a message to the second network device to indicate that the query fails.

17. The method according to claim 16, wherein the request message for querying for the terminal device context comprises one of the following:
a first part of a terminal device context identifier (UE context ID) of a terminal device;
an inactive radio network temporary identifier (I-RNTI); and
an enhanced inactive radio network temporary identifier (eI-RNTI).

18. A data transmission method, wherein the method comprises:
receiving, by a second network device, an access request message, wherein the access request message comprises second information, and the second information is used to identify a first network device within a second range;
when the second network device obtains a network device identifier based on the second information, sending, by the second network device, a connection setup accept message; and
when the second network device cannot obtain the network device identifier based on the second information, sending, by the second network device, a connection setup response message, wherein the connection setup response message indicates a terminal device to send information used to identify the first network device within a first range, and the second range is less than the first range.

19. The method according to claim 18, wherein when the second network device cannot obtain a network device identifier (gNB ID) based on the second information, the method further comprises:
receiving, by the second network device, a connection setup complete message, wherein the connection setup complete message comprises third information, and the third information is used to identify a message of the first network device within the first range.

20. The method according to claim 18 or 19, wherein the method further comprises:
sending, by the second network device through a service-based interface, a request message for querying for a terminal device context (UE context) to the first network device; and
receiving, by the second network device, a UE context sent by the first network device.

21. The method according to claim 20, wherein the request message for querying for the UE context comprises one of the following:
a terminal device context identifier (UE context ID) of the terminal device;
an inactive radio network temporary identifier (I-RNTI); and
an enhanced inactive radio network temporary identifier (eI-RNTI).

22. A data transmission method, wherein the method comprises:
receiving, by a second network device, a connection setup request message, wherein the connection setup request message comprises fifth information, the fifth information comprises a first part of a terminal device identifier (UE ID), and the fifth information is used to identify a first network device within a first range;
sending, by the second network device through a service-based interface, a request message for querying for a terminal device context (UE context) to the first network device;
when a message received from the first network device indicates that the query succeeds, sending, by the second network device, a connection setup complete message to a terminal device; and
when the message received from the first network device indicates that the query fails, sending, by the second network device, a connection setup response message to the terminal device, wherein the connection setup response message indicates the terminal device to send information comprising a second part of the UE ID.

23. The method according to claim 22, wherein when the message received from the first network device indicates that the query fails, the method further comprises:
receiving, by the second network device, the connection setup complete message, wherein the connection setup complete message comprises sixth information, and the sixth information comprises the second part of the UE ID.

24. A communication apparatus, wherein the communication apparatus comprises a processor, the processor is coupled to a memory, the memory is configured to store computer-executable instructions, the processor is configured to execute the instructions stored in the memory, and when the instructions are run by the processor, the communication apparatus is enabled to perform the method according to any one of claims 1 to 7 or any one of claims 8 to 12.

25. A communication apparatus, wherein the communication apparatus comprises a processor, the processor is coupled to a memory, the memory is configured to store computer-executable instructions, the processor is configured to execute the instructions stored in the memory, and when the instructions are run by the processor, the communication apparatus is enabled to perform the method according to either of claims 14 and 15 or either of claims 16 and 17.

26. A communication apparatus, wherein the communication apparatus comprises a processor, the processor is coupled to a memory, the memory is configured to store computer-executable instructions, the processor is configured to execute the instructions stored in the memory, and when the instructions are run by the processor, the communication apparatus is enabled to perform the method according to any one of claims 18 to 21 or either of claims 22 and 23.

27. A computer-readable storage medium, wherein the computer-readable storage medium stores a computer program, and when the computer program is executed by a computer, the method according to any one of claims 1 to 7 is performed, or the method according to any one of claims 8 to 12 is performed.

28. A computer-readable storage medium, wherein the computer-readable storage medium stores a computer program, and when the computer program is executed by a computer, the method according to either of claims 14 and 15 is performed, or the method according to either of claims 16 and 17 is performed.

29. A computer-readable storage medium, wherein the computer-readable storage medium stores a computer program, and when the computer program is executed by a computer, the method according to any one of claims 18 to 21 is performed, or the method according to either of claims 22 and 23 is performed.

30. A communication system, wherein the communication system comprises a terminal device, a first network device, and a second network device, the terminal device is configured to perform the method according to any one of claims 1 to 8, the first network device is configured to perform the method according to either of claims 14 and 15, and the second network device is configured to perform the method according to any one of claims 18 to 21.

31. A communication system, wherein the communication system comprises a terminal device, a first network device, and a second network device, the terminal device is configured to perform the method according to any one of claims 8 to 12, the first network device is configured to perform the method according to either of claims 16 and 17, and the second network device is configured to perform the method according to either of claims 22 and 23.
